# EUROPÄISCHE PATENTANMELDUNG

(11) **EP 4 140 608 A1**
(43) Veröffentlichungstag der Anmeldung: **01.03.2023**
(21) Anmeldenummer: 21193743.8
(22) Anmeldetag: 30.08.2021
(51) Int. Cl.: B21B 38/02, G01L 5/04

(54) **VERBESSERTE KONTAKTLOSE SCHWINGUNGSERFASSUNG BEI METALLBÄNDERN**

(71) Anmelder: Primetals Technologies Germany GmbH, 91058 Erlangen (DE)
(72) Erfinder: Hain, Simon, 91052 Erlangen (DE); Dolby, Mark, Christchurch (GB); Terry, David, Dorset, BH20 7QE (GB)
(74) Vertreter: Metals@Linz

(57) **Zusammenfassung**

Zwischen einer vorderen und einer hinteren Einrichtung (2, 3) einer Transporteinrichtung für ein Metallband (1) ist eine Messanordnung (6) angeordnet. Eine mechanische Anregungseinrichtung (7) der Messanordnung (6) regt das Metallband (1) in Dickenrichtung mit einer Anregungsfrequenz (fA) zu mechanischen Schwingungen an. Die Anregungseinrichtung (7) weist eine dem Metallband (1) zugewandte ebene Grenzfläche (13) auf. Eine Oberseite (15) der Metallplatte (14) der Messanordnung ist dem Metallband (1) zugewandt. In der Metallplatte (14) sind in Bandbreitenrichtung gesehen gegeneinander versetzt Sensorelemente (16) angeordnet, mittels derer für entsprechende Bereiche des Metallbandes (1) für die Amplitude (A) der angeregten mechanischen Schwingungen charakteristische Messsignale (MA) erfasst werden. Die Sensorelemente (16) ragen auf das Metallband (1) zu über die Oberseite (15) der Metallplatte (14) hinaus. Eine Abdeckung (17) der Messanordnung (6) besteht aus einem elektrisch isolierenden Material, deckt die Sensorelemente (16) an ihrer Oberseite ab und dichtet sie an ihren Seiten ab.

## Beschreibung

### Gebiet der Technik

Die vorliegende Erfindung geht aus von einer Messanordnung in einer Transporteinrichtung für ein Metallband,
- wobei die Messanordnung zwischen einer vorderen Einrichtung und einer der vorderen Einrichtung nachgeordneten hinteren Einrichtung der Transporteinrichtung angeordnet ist,
- wobei die Messanordnung eine mechanische Anregungseinrichtung aufweist, mittels derer das Metallband in seiner Dickenrichtung mit einer Anregungsfrequenz zu einer mechanischen Schwingung anregbar ist,
- wobei die mechanische Anregungseinrichtung eine dem Metallband zugewandte ebene Grenzfläche aufweist,
- wobei die Messanordnung eine Metallplatte aufweist, deren Oberseite dem Metallband zugewandt ist,
- wobei in der Metallplatte eine Mehrzahl von Sensorelementen angeordnet ist,
- wobei die Sensorelemente in einer Breitenrichtung des Metallbandes gesehen gegeneinander versetzt angeordnet sind,
- wobei mittels der Sensorelemente für mehrere in der Breitenrichtung gegeneinander versetzte Bereiche des Metallbandes jeweils ein Messsignal erfassbar ist, das für die Amplitude der angeregten mechanischen Schwingung des jeweiligen Bereichs des Metallbandes charakteristisch ist.

### Stand der Technik

Eine derartige Messanordnung ist bekannt. Rein beispielhaft kann auf die WO 98/38482 A1 verwiesen werden. Aus den erfassten Amplituden der mechanischen Schwingungen der Bereiche des Metallbandes kann die Planheit des Metallbandes ermittelt werden. Auch dies ist in der genannten WO-Schrift näher erläutert.

### Zusammenfassung der Erfindung

Beim Walzen von Metallbändern ist die Planheit des gewalzten Metallbandes ein wichtiges Qualitätsmerkmal. Insbesondere soll vermieden werden, dass das gewalzte Metallband nach dem Walzen wellig wird.

Zum Erfassen von entsprechenden Messwerten kann beispielsweise eine Messanordnung der oben genannten Art verwendet werden. Derartige Messanordnungen weisen gegenüber konventionellen Messanordnungen insbesondere den Vorteil auf, dass die Signalerfassung kontaktlos erfolgt und damit keine Gefahr der Beschädigung des Metallbandes besteht. Derartige Messanordnungen weisen aber auch einige Nachteile auf.

So sind in der Praxis beispielsweise die Sensorelemente derart in die Metallplatte eingebaut, dass sie bündig mit der Oberseite der Metallplatte abschließen. Dadurch sind die Sensoren der Sensorelemente - also diejenigen Elemente, welche die Messsignale erfassen - seitlich vom Material der Metallplatte umgeben. Dadurch erfolgt eine Signaldämpfung. Die erfassten Messsignale weisen also einen relativ niedrigen Pegel und damit ein relativ niedriges Signal-Rausch-Verhältnis (SNR) auf. Weiterhin werden die erfassten Messsignale in der Praxis als Analogsignale über Kabel an die Auswertungseinrichtung übermittelt. Aufgrund der langen Kabel sind Verfälschungen durch Temperatureinflüsse, Übersprechen (Crosstalk) und andere Störungen möglich. Dies erschwert die Auswertung der erfassten Messsignale.

Die Aufgabe der vorliegenden Erfindung besteht darin, Möglichkeiten zu schaffen, mittels derer die Nachteile des Standes der Technik vermieden werden.

Die Aufgabe wird durch eine Messanordnung mit den Merkmalen des Anspruchs 1 gelöst. Vorteilhafte Ausgestaltungen der erfindungsgemäßen Messanordnung sind Gegenstand der abhängigen Ansprüche 2 bis 12.

Erfindungsgemäß wird eine Messanordnung der eingangs genannten Art dadurch ausgestaltet,
- dass die Sensorelemente auf das Metallband zu über die Oberseite der Metallplatte hinausragen und
- dass die Messanordnung eine Abdeckung aufweist, die aus einem elektrisch isolierenden Material besteht und die Sensorelemente an ihrer Oberseite abdeckt und an ihren Seiten abdichtet.

Dadurch sind zum einen die Sensorelemente seitlich nicht mehr von Metall umgeben, so dass sich höhere Signalpegel und damit ein besseres Signal-Rausch-Verhältnis ergeben. Dennoch sind die Sensorelemente aufgrund der Abdeckung an ihrer Oberseite vor vom Metallband ausgehenden Einflüssen geschützt und aufgrund ihrer seitlichen Abdichtung vor anderen Umwelteinflüssen wie beispielsweise Staub, Schmutz, Wasserdampf usw. geschützt. Die Messanordnung ist damit einerseits sehr sensitiv, andererseits aber dennoch robust.

Vorzugsweise weist die Abdeckung auf ihrer den Sensorelementen zugewandten Unterseite Ausnehmungen auf, so dass zwischen der Metallplatte und der Abdeckung eine Anzahl von Strömungskanälen für ein Kühlmedium gebildet wird, mittels dessen die Sensorelemente kühlbar sind. Dadurch können die Sensorelemente auf einer relativ konstanten Temperatur gehalten werden, so dass Temperatureinflüsse beim Erfassen der Messsignale nicht gegeben sind bzw. zumindest gering gehalten werden können. Weiterhin kann durch das Kühlen die Standzeit der Sensorelemente erhöht werden.

Das Kühlmedium ist in der Regel ein Gas. Insbesondere kann es sich bei dem Kühlmedium um (gereinigte) Druckluft handeln. In Ausnahmefällen kann als Kühlmedium aber auch eine Flüssigkeit verwendet werden, beispielsweise ein Öl.

Vorzugsweise sind die Strömungskanäle derart ausgebildet, dass, bezogen auf einen der Strömungskanäle, die Sensorelemente in Strömungsrichtung des Kühlmediums gesehen sequenziell hintereinander angeordnet sind. Dadurch wird erreicht, dass durch das Kühlmedium zwangsweise alle Sensorelemente des entsprechenden Strömungskanals gekühlt werden.

Vorzugsweise ist vorgesehen,
- dass die Abdeckung auf ihrer Unterseite Aufnahmen für die Sensorelemente aufweist, soweit diese über die Oberseite der Metallplatte hinausragen,
- dass die Aufnahmen jeweils einen Einlass für das Kühlmedium und einen Auslass für das Kühlmedium aufweisen,
- dass der Auslass einer jeweiligen Aufnahme über einen jeweiligen Verbindungsabschnitt des jeweiligen Strömungskanals mit dem Einlass der in Strömungsrichtung des Kühlmediums gesehen jeweils nächsten Aufnahme kommunizierend verbunden ist und
- dass der Einlass und der Auslass einer jeweiligen Aufnahme vom jeweiligen Sensorelement aus gesehen einander gegenüberliegend angeordnet sind.

Dadurch wird zum einen erreicht, dass durch die Abdeckung der Abstand der Sensorelemente vom Metallband nur geringfügig vergrößert wird. Zum anderen wird dadurch erreicht, dass das durch den jeweiligen Strömungskanal strömende Kühlmedium zwangsweise jedes Sensorelement des jeweiligen Strömungskanals umströmen muss und dadurch zwangsweise jedes Sensorelement effizient gekühlt wird.

Die Oberseite der Abdeckung liegt vorzugsweise in der durch die ebene Grenzfläche gebildeten Ebene. Dadurch ergibt sich eine optimale Abstimmung der Anregungseinrichtung und der Anordnung der Sensorelemente einschließlich ihrer Abdeckung aufeinander.

Die Abdeckung muss mechanisch hinreichend stabil und auch hinreichend temperaturbeständig sein. Dies kann beispielsweise dadurch erreicht werden, dass die Abdeckung aus einer Keramik oder aus einem (geeigneten) Kunststoff besteht.

Keramiken sind in aller Regel auch bei höheren Temperaturen formbeständig. Bei Kunststoffen ist dies nicht stets der Fall. Es sind aber durchaus auch Kunststoffe bekannt, welche im erforderlichen Ausmaß temperaturbeständig sind. Beispiele derartiger Kunststoffe sind Polyimide und Polyesteresterketone (PEEK).

Vorzugsweise sind in der Metallplatte Kanäle für eine Kühlflüssigkeit angeordnet, mittels derer die Metallplatte und dadurch indirekt auch die Sensorelemente kühlbar sind. Dadurch kann die Kühlung der Sensorelemente noch weiter verbessert werden.

In einer bevorzugten Ausgestaltung ist weiterhin vorgesehen,
- dass die Sensorelemente jeweils eine Hülse mit einem Außengewinde aufweisen,
- dass in der jeweiligen Hülse ein jeweiliger Sensor angeordnet ist, mittels dessen jeweils eines der Messsignale erfassbar ist, und
- dass auf die jeweilige Hülse ein jeweiliges Fixierungselement aufgebracht ist, das einen in Radialrichtung über die jeweilige Hülse nach radial außen vorspringenden Kragen aufweist.

Das Sensorelement ist also die mechanische Einheit, welche in die Metallplatte eingebaut wird. Der Sensor hingegen ist dasjenige Element des Sensorelements, welches die eigentliche Erfassung der Messsignale vornimmt. Das Fixierungselement ist dasjenige Element, das mechanisch mit der Metallplatte zusammenwirkt.

Durch die Ausgestaltung der Sensorelemente mit Hülse, Sensor und Fixierungselement ist es möglich, die Sensorelemente vorzukonfektionieren. Dadurch kann insbesondere der Abstand zwischen der Oberkante des Sensors und der Oberkante und/oder der Unterkante des Kragens bei der Herstellung des Sensorelements exakt eingestellt werden. Dadurch kann das Sensorelement auf einfache Weise derart in der Metallplatte fixiert werden, dass der Sensor einen definierten Abstand von der Oberkante der Abdeckung aufweist. Die Verbindung von Hülse, Sensor und Fixierungselement ist vorzugsweise unlösbar. Beispielsweise können die genannten Elemente miteinander geklebt, miteinander geschweißt oder miteinander gelötet sein.

Vorzugsweise weist die Metallplatte Aufnahmen für die Sensorelemente auf, die ihrerseits jeweils einen nach radial innen ragenden Auflagering für den jeweiligen Kragen des jeweiligen Sensorelements aufweisen. Dadurch können die Sensorelemente in der Metallplatte auf einfache Weise exakt und vor allen Dingen mit einer exakten Höhenlage (also in Richtung des Metallbandes gesehen) befestigt werden.

Vorzugsweise ist auf den jeweiligen Sensor an seiner dem Metallband zugewandten Seite eine Kunststoffhaube aufgebracht, so dass der jeweilige Sensor, soweit er über die Metallplatte hinausragt, luftdicht und wasserdicht versiegelt ist. Dadurch ist der Sensor noch besser vor Umwelteinflüssen geschützt.

Die Sensorelemente umfassen in der Regel Wirbelstromsensoren. In diesem Fall werden die Wirbelstromsensoren von in der Metallplatte unmittelbar benachbart angeordneten Sensorelementen vorzugsweise mit voneinander verschiedenen Betriebsfrequenzen betrieben. Dadurch kann ein Übersprechen deutlich reduziert werden. Die Anzahl an Betriebsfrequenzen liegt minimal bei zwei. In vielen Fällen liegt sie bei drei.

Vorzugsweise weisen die Sensorelemente eine Kodierung auf, die für die Betriebsfrequenz des jeweiligen Sensorelements charakteristisch ist. Die Kodierung ist derart, dass sie von einem Menschen mit seinen Sinnesorganen unmittelbar wahrnehmbar ist. Dadurch können die Sensorelemente von einer Bedienperson schnell und auf einfache Weise voneinander unterschieden werden, so dass ein Einbau der Sensorelemente an den "richtigen" Stellen der Metallplatte gewährleistet ist. Die Kodierung kann nach Bedarf mechanischer und/oder haptischer und/oder optischer Natur sein. Im Falle einer mechanischen Kodierung kann unter Umständen sogar erreicht werden, dass ein Einbau eines Sensorelements an einer "falschen" Stelle der Metallplatte unmöglich ist.

Alternativ oder zusätzlich kann beispielsweise von einer Auswertungseinrichtung geprüft werden, mit welcher Betriebsfrequenz die Sensorelemente jeweils arbeiten. Wenn in diesem Fall in der Auswertungseinrichtung hinterlegt ist, welcher Sensor mit welcher Betriebsfrequenz arbeiten soll, kann die Überprüfung durch die Auswertungseinrichtung vorgenommen werden und im Fehlerfall eine Fehlermeldung ausgegeben werden.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Seitenansicht einer Walzeinrichtung,
- FIG 2: eine perspektivische Seitenansicht eines Metallbandes und einer Messanordnung,
- FIG 3: eine perspektivische Ansicht von oben auf einen Teil der Messanordnung von FIG 2, wobei eine Abdeckung teilweise entfernt ist,
- FIG 4: einen Teil der Messanordnung der FIG 2 und 3,
- FIG 5: einen einzelnen Sensor,
- FIG 6: eine perspektivische Darstellung einer Unterseite einer Abdeckung,
- FIG 7: einen Schnitt durch eine Metallplatte und eine Abdeckung,
- FIG 8: ein einzelnes Sensorelement,
- FIG 9: einen Ausschnitt der Metallplatte und ein einzelnes Sensorelement,
- FIG 10: Sensorelemente und Digitalisierungseinrichtungen,
- FIG 11: eine Einbaueinheit, welche eine Metallplatte mit Sensorelementen und Digitalisierungseinrichtungen umfasst,
- FIG 12: die Einbaueinheit von FIG 11 mit einer entfernten Abdeckplatte,
- FIG 13: eine Methode der Signalübertragung,
- FIG 14: eine Zuordnung von Betriebsfrequenzen zu Sensorelementen und
- FIG 15: eine mögliche Auswertung von übermittelten Signalen.

### Beschreibung der Ausführungsformen

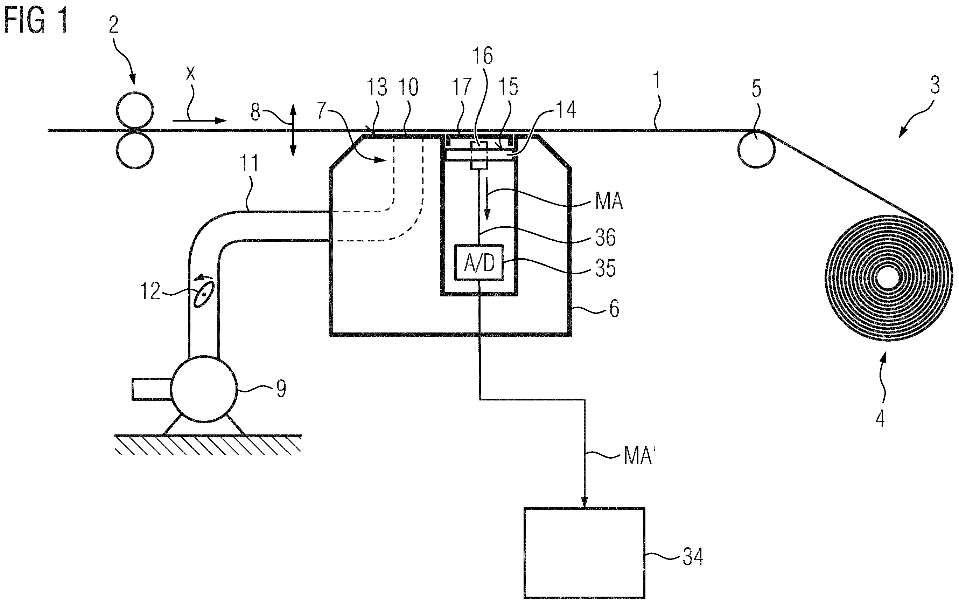

Gemäß FIG 1 weist eine Transporteinrichtung für ein Metallband 1 eine vordere Einrichtung 2 auf. Die vordere Einrichtung ist in der Regel ein Walzgerüst. Von dem Walzgerüst sind in FIG 1 nur die Arbeitswalzen dargestellt. Oftmals weist das Walzgerüst jedoch zusätzliche Walzen auf, beispielsweise im Falle eines Quartogerüsts zusätzlich zu den Arbeitswalzen Stützwalzen und im Falle eines Sextogerüsts zusätzlich zu den Arbeitswalzen Zwischenwalzen und Stützwalzen. Auch andere Ausgestaltungen sind möglich, beispielsweise als 20-Rollen-Walzgerüst oder als 12-Rollen-Walzgerüst.

Dem Walzgerüst kann einlaufseitig ein weiteres Walzgerüst vorgeordnet sein. Auch können dem Walzgerüst einlaufseitig mehrere weitere Walzgerüste vorgeordnet sein. Ebenso ist es möglich, dass dem Walzgerüst beispielsweise direkt eine Haspeleinrichtung zum Abhaspeln des Metallbandes 1 vorgeordnet ist. Auch kann die vordere Einrichtung 2 selbst eine andere Einrichtung als ein Walzgerüst sein. Beispiele derartiger Einrichtungen sind ein Treibrollensatz und ein Haspel. Welche dieser Ausgestaltungen gegeben ist, ist im Rahmen der vorliegenden Erfindung von untergeordneter Bedeutung. Aus diesem Grund ist auch die Ausgestaltung der Walzeinrichtung einlaufseitig der vorderen Einrichtung 2 in den FIG nicht dargestellt und wird auch nicht näher erläutert.

Die Transporteinrichtung weist weiterhin eine hintere Einrichtung 3 auf. Die hintere Einrichtung 3 ist der vorderen Einrichtung 2 nachgeordnet. Die hintere Einrichtung 3 kann beispielsweise entsprechend der Darstellung in FIG 1 einen Haspel 4 und eine dem Haspel 4 vorgeordnete Umlenkrolle 5 umfassen. Die konkrete Ausgestaltung der nachgeordneten Einrichtung 3 ist von untergeordneter Bedeutung. Entscheidend ist, dass durch die vordere Einrichtung 2 und die hintere Einrichtung 3 eine Passline für das Metallband 1 definiert ist, entlang derer das Metallband 1 in einer Förderrichtung x von der vorderen Einrichtung 2 zur hinteren Einrichtung 3 gefördert wird. Die Förderrichtung x ist in aller Regel horizontal oder zumindest nahezu horizontal. Eine Transportgeschwindigkeit, mit welcher das Metallband 1 aus der vorderen Einrichtung 2 ausläuft, kann im Falle der Ausgestaltung der vorderen Einrichtung 2 als Walzgerüst bei bis zu 400 m/min liegen, manchmal sogar noch etwas darüber.

Zwischen der vorderen Einrichtung 2 und der hinteren Einrichtung 3 können verschiedene Einrichtungen angeordnet sein, die im Rahmen der vorliegenden Erfindung von untergeordneter Bedeutung sind, beispielsweise eine Dickenmesseinrichtung. Entscheidend ist im vorliegenden Fall, dass zwischen der vorderen Einrichtung 2 und der hinteren Einrichtung 3 eine Messanordnung 6 angeordnet ist.

Die Messanordnung 6 weist eine mechanische Anregungseinrichtung 7 auf. Mittels der mechanischen Anregungseinrichtung 7 kann das Metallband 1 in seiner Dickenrichtung zu einer mechanischen Schwingung angeregt werden. Konkret ist das Metallband 1 in FIG 1 in einer durchgezogenen Linie in einer mittleren Stellung eingezeichnet. Die Auslenkung aus der mittleren Stellung ist in FIG 1 durch einen Doppelpfeil 8 angedeutet. Die Anregung zu der mechanischen Schwingung erfolgt mit einer Anregungsfrequenz fA.

Die mechanische Anregungseinrichtung 7 kann beispielsweise entsprechend der Darstellung in FIG 1 als Saugeinrichtung ausgebildet sein. Diese Ausgestaltung ist etabliert, robust und zuverlässig.

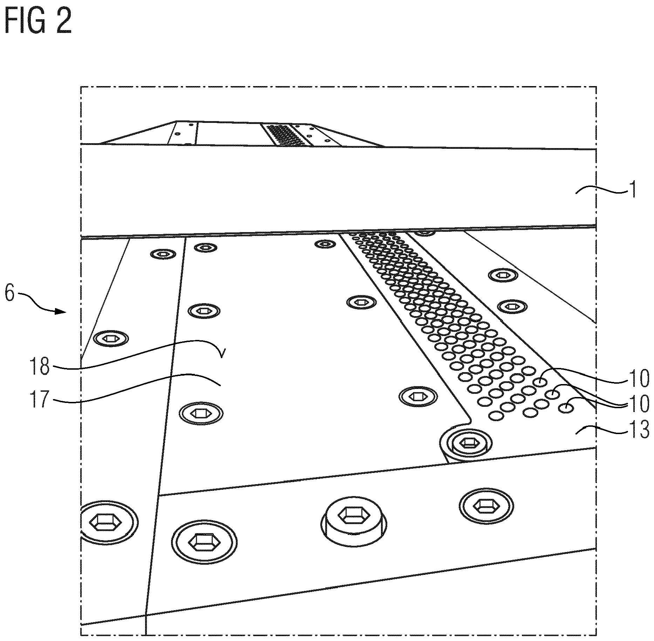

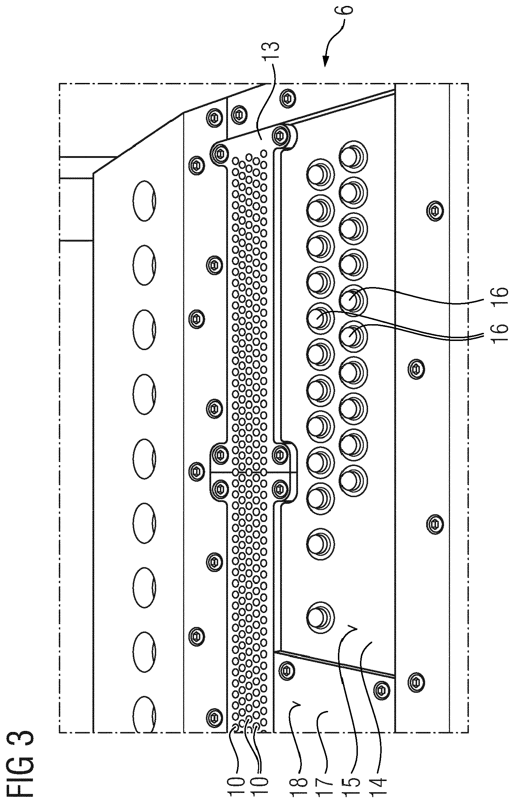

Beispielsweise kann ein Sauggebläse 9 über Saugöffnungen 10 (siehe insbesondere die FIG 2 und 3; dort sind nur einige wenige der Saugöffnungen 10 mit ihrem Bezugszeichen versehen) und einen Saugkanal 11 aus dem Bereich zwischen dem Metallband 1 und der Messanordnung 6 Luft absaugen und damit das Metallband 1 einseitig periodisch mit einem Unterdruck beaufschlagen. Das Ausmaß, in dem Luft abgesaugt wird, kann durch direkte Ansteuerung des Sauggebläses 9 und/oder durch Ansteuerung eines Modulatorelements 12 variiert werden. Im Falle der Ansteuerung des Modulatorelements 12 variiert das Modulatorelement 12 in periodischer Weise den aktuellen Querschnitt und damit den Strömungswiderstand des Saugkanals 11. Das Modulatorelement 12 kann beispielsweise als ovales oder elliptisches Element ausgebildet sein, das im Saugkanal 11 rotiert wird.

Wie bereits erwähnt, ist diese Ausgestaltung etabliert. Detaillierte Erläuterungen hierzu sind daher nicht erforderlich.

Um das Metallband 1 wirksam in Schwingungen versetzen zu können, weist die mechanische Anregungseinrichtung 7 eine ebene Grenzfläche 13 auf. Die ebene Grenzfläche 13 ist dem Metallband 1 zugewandt und verläuft in einem geringen Abstand (meist im einstelligen Millimeterbereich) von der Passline. In der Grenzfläche 13 sind die Saugöffnungen 10 angeordnet.

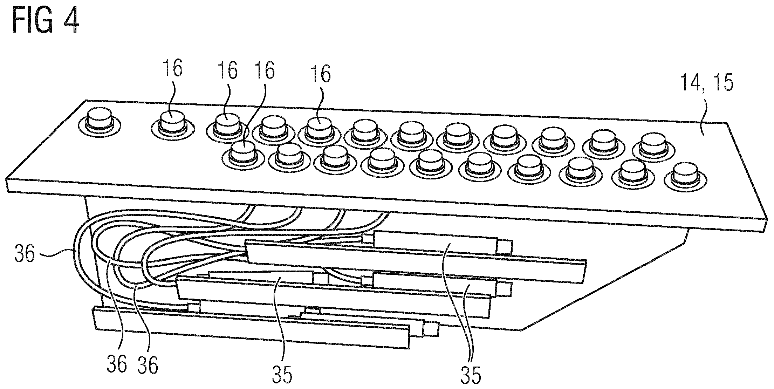

Die Messanordnung 6 weist gemäß den FIG 3 und 4 weiterhin eine Metallplatte 14 auf. Die Metallplatte 14 ist neben der Grenzfläche 13 angeordnet. Die Metallplatte 14 weist eine dem Metallband 1 zugewandte Oberseite 15 auf. Die Metallplatte 14 ist gegenüber der Grenzfläche 13 versetzt, so dass die Oberseite 15 einen größeren Abstand von der Passline aufweist als die Grenzfläche 13.

In der Metallplatte 14 ist gemäß den FIG 1, 3 und 4 eine Mehrzahl von Sensorelementen 16 angeordnet. Die Messanordnung 6 weist also diese Mehrzahl von Sensorelementen 16 auf. In FIG 1 ist hierbei der Übersichtlichkeit halber nur eines der Sensorelemente 16 dargestellt. In den FIG 3 und 4 sind nur einige der Sensorelemente 16 mit ihrem Bezugszeichen versehen. Ersichtlich schließen die Sensorelemente 16 nicht bündig mit der Oberseite 15 der Metallplatte 14 ab, sondern ragen auf das Metallband 1 zu über die Oberseite 15 hinaus. Die Messanordnung 6 weist daher eine Abdeckung 17 auf. Die Abdeckung 17 deckt die Sensorelemente 16 an ihrer Oberseite (also zum Metallband 1 hin) ab. Zu den Seiten der Sensorelemente 16 hin dichtet die Abdeckung 17 die Sensorelemente 16 ab. Eine Oberseite 18 der Abdeckung 17 liegt gemäß FIG 2 in der durch die ebene Grenzfläche 13 gebildeten Ebene.

Die Abdeckung 17 besteht aus einem elektrisch isolierenden Material. Beispielsweise kann die Abdeckung 17 aus einer Keramik oder aus einem Kunststoff besteht. Geeignete Keramiken und geeignete Kunststoffe, beispielsweise Polyimide und Polyesteresterketone (PEEK), sind Fachleuten bekannt.

Die Sensorelemente 16 sind in Breitenrichtung des Metallbandes 1 gesehen gegeneinander versetzt angeordnet. In der konkreten Ausgestaltung der vorliegenden Erfindung bilden die Sensorelemente 16 zwei Reihen, wobei in Breitenrichtung gesehen innerhalb der jeweiligen Reihe die entsprechenden Sensorelemente 16 nebeneinander angeordnet sind und in der Gesamtbetrachtung der Reihen die Sensorelemente 16 der Reihen gegenüber den Sensorelementen 16 der anderen Reihen in Breitenrichtung gesehen versetzt angeordnet sind. Diese Ausgestaltung, also mit mehreren Reihen von Sensorelementen 16 und gegeneinander versetzten Reihen, ist derzeit bevorzugt, im Ergebnis jedoch von untergeordneter Bedeutung.

Mittels der Sensorelemente 16 kann für einen jeweiligen Bereich des Metallbandes 1 ein jeweiliges Messsignal MA erfasst werden, wobei das jeweilige Messsignal MA für die Amplitude A der angeregten mechanischen Schwingung des jeweiligen Bereichs des Metallbandes 1 charakteristisch ist. Die Bereiche des Metallbandes 1 sind entsprechend der Anordnung der Sensorelemente 16 ebenfalls in Breitenrichtung des Metallbandes 1 gegeneinander versetzt.

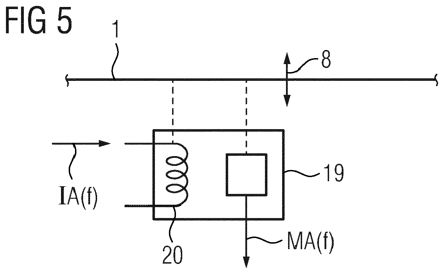

Die Erfassung des jeweiligen Messsignals MA erfolgt kontaktlos. Mögliche Ausgestaltungen hierfür sind Fachleuten allgemein bekannt. Bevorzugt ist, dass die Sensorelemente 16 (= Baueinheit) als eigentliche Sensoren 19, die das jeweilige Messsignal MA erfassen, Wirbelstromsensoren umfassen. Bei einem Wirbelstromsensor wird - siehe FIG 5 für einen einzelnen Wirbelstromsensor - mittels eines Anregungsstroms IA einer Anregungsspule 20 in dem jeweiligen Bereich des Metallbandes 1 ein Wirbelstrom induziert. Das Ausmaß, in dem der Wirbelstrom induziert wird, kann erfasst werden. Aus diesem Ausmaß wird das jeweilige (analoge) Messsignal MA abgeleitet.

Der Anregungsstrom IA weist eine Anregungsfrequenz f auf, nachfolgend zur Unterscheidung von der Anregungsfrequenz fA als Betriebsfrequenz bezeichnet. Die Betriebsfrequenz f liegt meist im Bereich von etlichen kHz, manchmal sogar im einstelligen MHz-Bereich. Das Messsignal MA weist ebenfalls die Betriebsfrequenz f auf. Aus dem Messsignal MA kann damit in an sich bekannter Art und Weise der jeweils aktuelle Abstand des jeweiligen Bereichs des Metallbandes 1 von der Messanordnung 6 ermittelt werden. Die zeitliche Entwicklung dieses Abstands liefert die Amplitude A der mechanischen Schwingung des entsprechenden Bereichs des Metallbandes 1.

Diese Vorgehensweise ist Fachleuten allgemein bekannt und vertraut. Sie muss daher nicht im Detail erläutert werden.

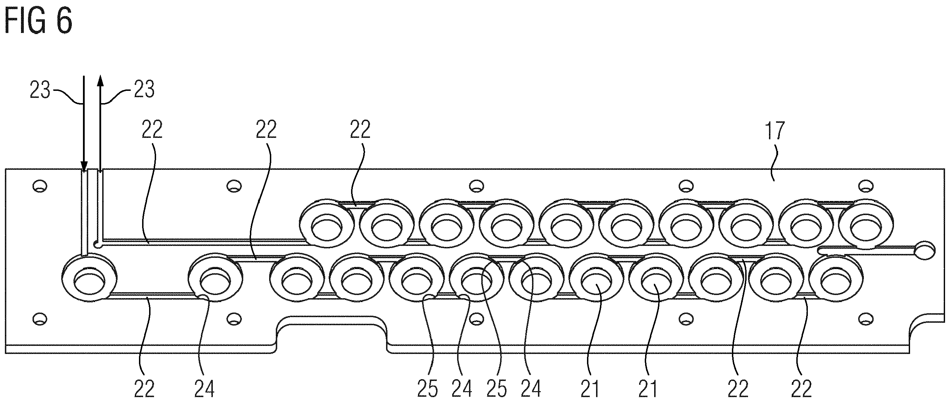

Die Abdeckung 17 weist gemäß FIG 6 auf ihrer Unterseite, also derjenigen Seite, die den Sensorelementen 16 zugewandt ist, Aufnahmen 21 auf. In die Aufnahmen 21 tauchen beim Montieren der Abdeckung 17 auf der Metallplatte 14 die Sensorelemente 16 ein (selbstverständlich nur, soweit diese über die Oberseite 15 der Metallplatte 14 hinausragen).

Die Abdeckung 17 weist auf ihrer Unterseite weiterhin Ausnehmungen 22 auf. In FIG 6 sind nur einige der Ausnehmungen 22 mit ihrem Bezugszeichen versehen. Durch die Ausnehmungen 22 in ihrer Gesamtheit wird zwischen der Metallplatte 14 und der Abdeckung 17 eine Anzahl von Strömungskanälen für ein Kühlmedium 23 gebildet. Die Sensorelemente 16 können somit mittels des Kühlmediums 23 aktiv gekühlt werden.

In der Darstellung gemäß FIG 6 wird ein einziger Strömungskanal gebildet. Es könnten jedoch auch mehrere Strömungskanäle gebildet werden. Die nachfolgenden Ausführungen bezüglich der Abfolge von Sensorelementen 16 beziehen sich auf den jeweiligen Strömungskanal. Im Falle mehrerer Strömungskanäle sind die Strömungskanäle voneinander getrennt. Die Sensorelemente 16 sind also jeweils nur in einen einzigen Strömungskanal eingebunden. Im Falle mehrerer Strömungskanäle sind die nachfolgenden Aussagen für jeden Strömungskanal für sich betrachtet gültig.

Gemäß FIG 4 ist der Strömungskanal derart ausgebildet, dass die Sensorelemente 16 in Strömungsrichtung des Kühlmediums 23 gesehen sequenziell hintereinander angeordnet sind. Das Kühlmedium 23 kühlt also zuerst eines der Sensorelemente 16, dann das nächste Sensorelement 16, dann das wieder nächste Sensorelements 16 usw., bis alle Sensorelemente 16 des jeweiligen Strömungskanals gekühlt sind.

Aus FIG 6 ist weiterhin erkennbar, dass die Aufnahmen 21 jeweils einen Einlass 24 für das Kühlmedium 23 aufweisen und jeweils einen Auslass 25 für das Kühlmedium 23 aufweisen. In FIG 6 sind die Einlässe 24 und die Auslässe 25 der Übersichtlichkeit halber nur für einige der Aufnahmen 21 mit ihren Bezugszeichen versehen. Ersichtlich ist zum einen der Auslass 25 einer jeweiligen Aufnahme 21 über einen jeweiligen Verbindungsabschnitt des jeweiligen Strömungskanals mit dem Einlass 24 der jeweils nächsten Aufnahme 21 kommunizierend verbunden. Der Begriff "nächste Aufnahme" bezieht sich in diesem Zusammenhang auf die nächste Aufnahme 21 in Strömungsrichtung des Kühlmediums 23 gesehen. Zum anderen sind der Einlass 24 und der Auslass 25 einer jeweiligen Aufnahme 21 vom jeweiligen Sensorelement 16 aus gesehen einander gegenüberliegend angeordnet. Demzufolge wird das jeweilige Sensorelements 16 von dem Kühlmedium 23 vollständig umspült und damit gekühlt.

Das Kühlmedium 23 kann beispielsweise (gereinigte) Druckluft sein. Diese Ausgestaltung bietet den zusätzlichen Vorteil, dass kleinere Undichtigkeiten unkritisch sind. Denn die Druckluft weist einen höheren Druck auf als die Umgebungsluft. Trotz der Undichtigkeit können daher keine Fremdkörper in den von der Abdeckung 17 abgedeckten Raum eindringen. Dennoch kann die Kühlung der Sensorelemente 16 beibehalten werden, sofern die Undichtigkeit geringfügig genug ist.

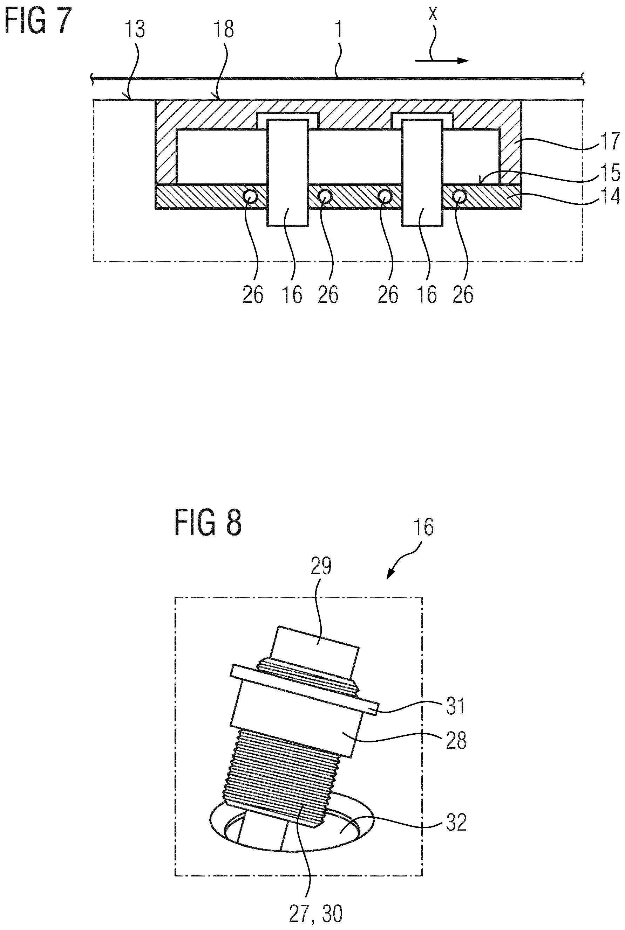

In manchen Fällen kann es ausreichen, die Sensorelemente 16 ausschließlich mit dem Kühlmedium 23 zu kühlen. In anderen Fällen ist es entsprechend der schematischen Darstellung in FIG 7 erforderlich, in der Metallplatte 14 Kanäle 26 für eine Kühlflüssigkeit anzuordnen. In diesem Fall wird durch die Kühlflüssigkeit direkt die Metallplatte 14 gekühlt. Indirekt werden dadurch auch die Sensorelemente 16 gekühlt.

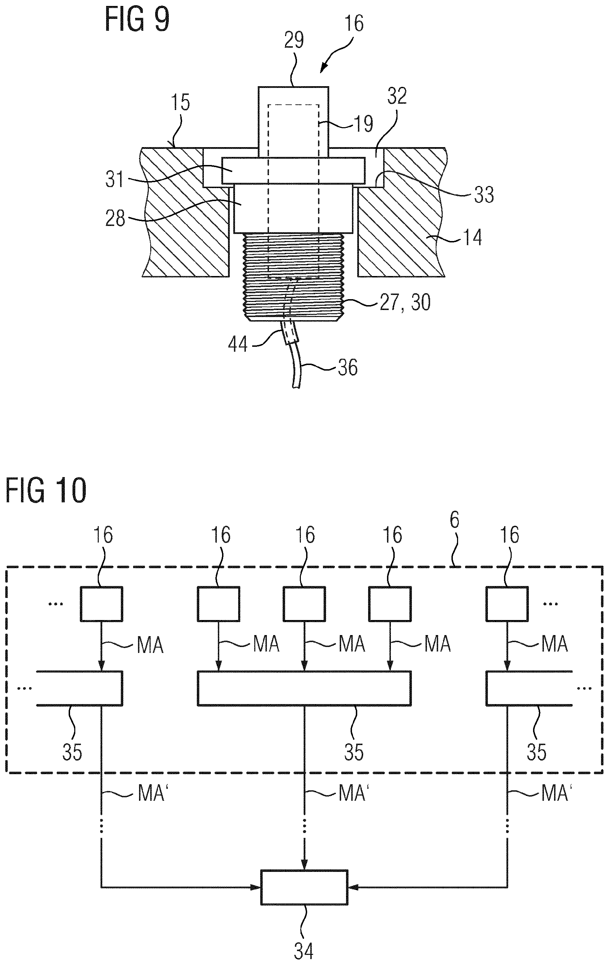

Nachstehend wird in Verbindung mit den FIG 8 und 9 der Aufbau eines einzelnen Sensorelements 16 näher erläutert.

Gemäß den FIG 8 und 9 handelt es sich bei den Sensorelementen 16 um vorkonfektionierte Einheiten, die aus mehreren Komponenten bestehen. Diese Komponenten sind - zusätzlich zum Sensor 19, mittels dessen das jeweilige Messsignal MA erfasst wird - eine Hülse 27 und ein Fixierungselement 28. Zusätzlich kann auf den Sensor 19 selbst an seiner später dem Metallband 1 zugewandten Seite eine Kunststoffhaube 29 aufgebracht sein. Mittels der Kunststoffhaube 29 (sofern sie vorhanden ist) wird der Sensor 16 (soweit er im montierten Zustand über die Metallplatte 14 hinausragt) luftdicht und wasserdicht versiegelt.

In der Hülse 27 ist gemäß FIG 8 der Sensor 19 (gegebenenfalls einschließlich Kunststoffhaube 29) angeordnet. Die Hülse 27 ihrerseits weist ein Außengewinde 30 auf. Auf die Hülse 27 ist das Fixierungselement 28 aufgebracht. Das Fixierungselement 28 weist somit ein korrespondierendes Innengewinde auf (nicht dargestellt). Das Fixierungselement 28 weist einen Kragen 31 auf, der in Radialrichtung nach radial außen über die Hülse 27 vorspringt.

Die Komponenten, also der Sensor 19, die Hülse 27 und das Fixierungselement 28, sind relativ zueinander fixiert. Beispielsweise kann der Sensor 19 in die Hülse 27 eingeklebt sein und kann das Fixierungselement 28 auf der Hülse 27 über Lötpunkte oder Schweißpunkte fixiert sein. Bei der Montage des Sensorelements 16 kann dadurch erreicht werden, dass der Abstand der Unterkante oder der Oberkante des Kragens 31 zur Oberseite des Sensors 19 (oder, falls vorhanden, zur Oberseite der Kunststoffhaube 29) definiert eingestellt wird. Beispielsweise kann zuerst der Sensor 19 in der Hülse 27 fixiert werden. Zuvor oder danach kann gegebenenfalls die Kunststoffhaube 29 auf den Sensor 19 aufgesetzt werden. Danach wird der Abstand der Unterkante oder der Oberkante des Kragens 31 eingestellt. Erst zuletzt wird das Fixierungselement 28 auf der Hülse 27 fixiert.

Die Metallplatte 14 weist - siehe insbesondere FIG 9 - Aufnahmen 32 für die Sensorelemente 16 auf. Die Aufnahmen 32 weisen ihrerseits jeweils einen nach radial innen ragenden Auflagering 33 auf. Wenn das entsprechende Sensorelements 16 in der entsprechenden Aufnahme 32 montiert ist liegt somit der Kragen 31 auf dem Auflagering 33 auf.

Wie obenstehend bereits erläutert, kann mittels der Sensorelemente 16 für die Bereiche des Metallbandes 1 ein jeweiliges Messsignal MA erfasst werden. Die Erfassung erfolgt kontaktlos, in der Regel über Wirbelstromsensoren. Zu diesem Zweck weisen die Wirbelstromsensoren Anregungsspulen 20 auf, die mit Anregungsströmen IA von etlichen kHz auf, manchmal sogar im einstelligen MHz-Bereich, beaufschlagt werden. Die erfassten Messsignale MA sind zunächst analog.

Im Stand der Technik werden die Messsignale MA über entsprechende Kabel an eine Auswertungseinrichtung 34 (siehe FIG 1 und 10) übermittelt, die außerhalb der Messanordnung 6 angeordnet ist, in der Regel in einem Schaltschrank. Im Rahmen der vorliegenden Erfindung sind jedoch innerhalb der Messanordnung 6 Digitalisierungseinrichtungen 35 angeordnet. In FIG 1 ist eine einzelne der Digitalisierungseinrichtungen 35 dargestellt, in FIG 10 sind einige wenige der Digitalisierungseinrichtungen 35 dargestellt. Mittels der Digitalisierungseinrichtungen 35 werden die erfassten analogen Messsignale MA digitalisiert.

Die Auswertungseinrichtung 34 ist -ebenso wie im Stand der Technik - außerhalb der Messanordnung 6 angeordnet, beispielsweise in einem Schaltschrank. Die Digitalisierungseinrichtungen 35 übermitteln an die Auswertungseinrichtung 34 als übermittelte Signale MA' im einfachsten Fall die digitalisierten Messsignale selbst. Alternativ können die Digitalisierungseinrichtungen 35 an die Auswertungseinrichtung 34 als übermittelte Signale MA' aus den digitalisierten Messsignalen abgeleitete Signale übermitteln.

Die Anordnung der Digitalisierungseinrichtungen 35 innerhalb der Messanordnung 6 kann nach Bedarf sein. Beispielsweise können die Digitalisierungseinrichtungen 35 entsprechend der Darstellung in den FIG 1, 10, 11 und 12 als eigenständige, von den Sensorelementen 16 getrennte Elemente ausgebildet sein. In diesem Fall sind die Digitalisierungseinrichtungen 35 innerhalb der Messanordnung 6 über Kabel 36 mit den Sensorelementen 16 verbunden. Bezüglich ihrer Anordnung können die Digitalisierungseinrichtungen 35 insbesondere unterhalb der Metallplatte 14 angeordnet sein. Die Kabel 36 sind in der Regel sehr kurz (meist maximal 100 cm, oftmals sogar nur 50 cm oder weniger).

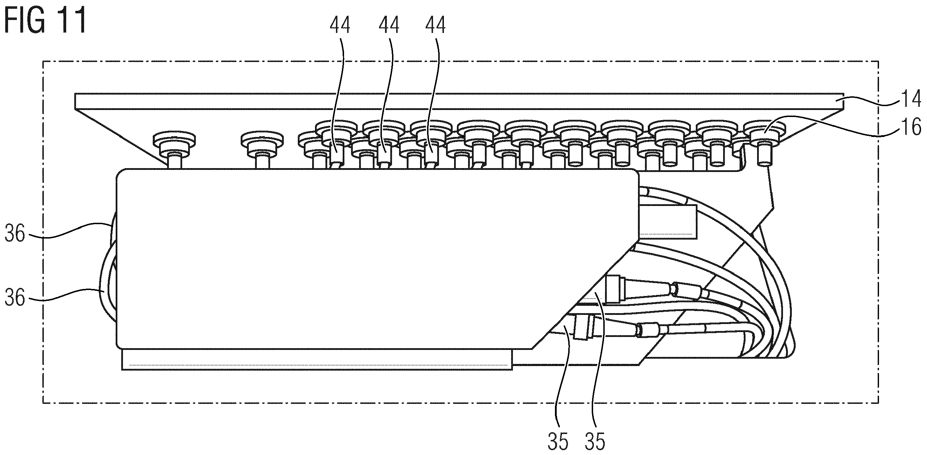

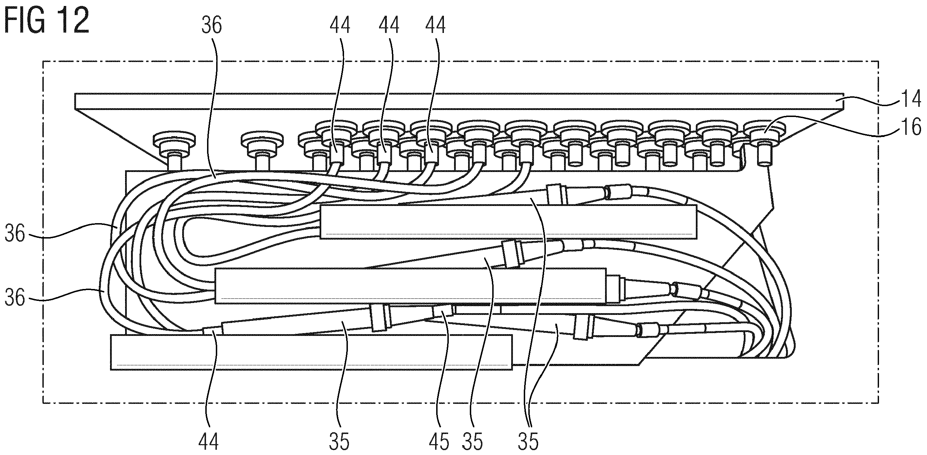

Die Digitalisierungseinrichtungen 35 sind in den FIG 11 und 12 - siehe ergänzend auch FIG 4 - als zigarrenähnliche Elemente dargestellt. Das Wort "zigarrenähnlich" bezieht sich in diesem Zusammenhang sowohl auf die grundlegende Form (ein langgestreckter Zylinder) als auch auf die absoluten Abmessungen (Länge ca. 15 cm bis 30 cm, Durchmesser ca. 1,0 cm bis 3,0 cm). Diese Form der Digitalisierungseinrichtungen 35 ist derzeit bevorzugt, aber in keiner Weise zwingend.

Die Kabel 36 sind in aller Regel mit den Digitalisierungseinrichtungen 35 lösbar verbunden, beispielsweise über eine Schraubverbindung oder eine Verbindung nach Art eines Bajonettverschlusses. Am Übergang zu den Sensorelementen 16 hin sind die Kabel 36 vorzugsweise hermetisch (also luft- und wasserdicht) abgedichtet. Die Abdichtung kann beispielsweise so, wie es bei Kraftfahrzeugmotoren für deren Zündkerzenstecker bekannt ist, durch gummielastische Manschetten erfolgen, die auf dem entsprechenden Kabel 36 verschiebbar angeordnet sind. Alternativ können - und dies ist derzeit bevorzugt - die Kabel 36 mit ihrem jeweiligen Sensorelement 16 unlösbar verbunden sein.

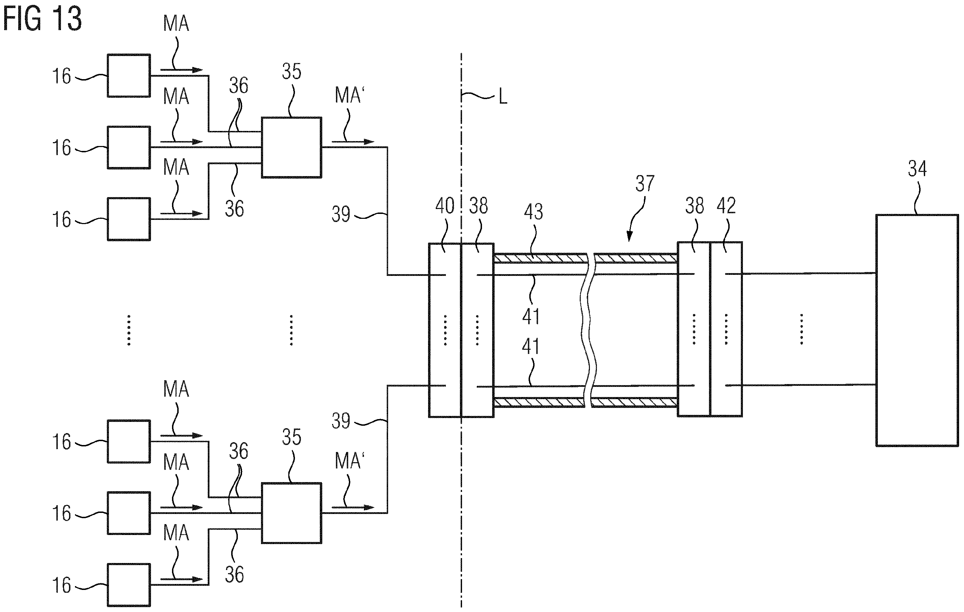

Bezüglich der Verbindung der Digitalisierungseinrichtungen 35 mit der Auswertungseinrichtung 34 ist es prinzipiell möglich, die Verbindung über einzelne entsprechende Verbindungskabel herzustellen, so wie dies für die Übermittlung der analogen Messsignale MA im Stand der Technik erfolgt. Bevorzugt ist es jedoch, wenn die übermittelten Signale MA' entsprechend der Darstellung in FIG 13 über ein gemeinsames gepanzertes Kabel 37 mit vorkonfektionierten Anschlüssen 38 an die Auswertungseinrichtung 34 übermittelt werden. Dies wird nachstehend näher erläutert.

Gemäß FIG 13 verlaufen von den Digitalisierungseinrichtungen 35 einzelne Leitungen oder dünne Kabel 39 zu einer vorkonfektionierten Steckverbindung 40. Auf die vorkonfektionierte Steckverbindung 40 kann einer der vorkonfektionierten Anschlüsse 38 des gepanzerten Kabels 37 aufgesteckt werden, der am einen Ende des gepanzerten Kabels 37 angeordnet ist. Innerhalb des gepanzerten Kabels 37 werden mit den einzelnen Leitungen oder dünnen Kabeln 39 korrespondierende Leitungen 41 zu dem anderen vorkonfektionierten Anschluss 38 geführt, der am anderen Ende des gepanzerten Kabels 37 angeordnet ist. Dieser vorkonfektionierte Anschluss 38 ist mit einer weiteren Steckverbindung 42 verbunden, von der aus Leitungen zur Auswertungseinrichtung 34 geführt werden.

Die Panzerung 43 des gepanzerten Kabels 37 kann beispielsweise derjenigen entsprechen, wie sie für Hydraulikleitungen üblich ist, deren Hydraulikflüssigkeit unter einem Druck im Bereich von 100 bar bis 500 bar steht.

Die gestrichelte Linie L in FIG 13 soll die Grenze der Messanordnung 6 andeuten. Gemäß der Darstellung von FIG 13 kann das gepanzerte Kabel 37 kann also von außerhalb der Messanordnung 6 angeschlossen werden, ohne die Messanordnung 6 öffnen zu müssen. Alternativ ist es natürlich auch möglich, die vorkonfektionierte Steckverbindung 40 innerhalb der Messanordnung 6 anzuordnen.

FIG 13 zeigt zugleich auch eine weitere bevorzugte Ausgestaltung. Bei dieser Ausgestaltung umfasst das gepanzerte Kabel 37 für die übermittelten Signale MA' von Gruppen von jeweils mehreren Sensorelementen 16 jeweils eigene Leitungen 41. Konkret werden in den Digitalisierungseinrichtungen 35 jeweils die digitalisierten Messsignale von drei Sensorelementen 16 zusammengefasst. Die Anzahl "drei" ist in diesem Zusammenhang von untergeordneter Bedeutung.

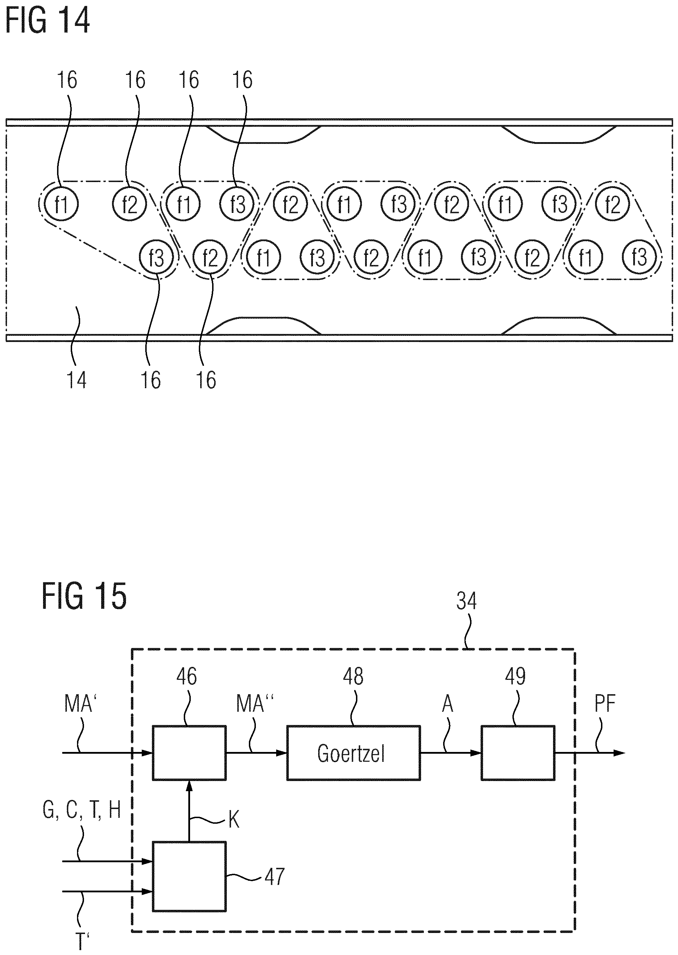

FIG 14 zeigt schematisch eine Draufsicht auf die Sensorelemente 16, also wie sie von dem Metallband 1 aus gesehen werden. In die Sensorelemente 16 sind Bezugszeichen f1, f2 und f3 eingezeichnet. f1, f2 und f3 sind - analog zur Betriebsfrequenz f - ebenfalls Betriebsfrequenzen. Sie sind jedoch paarweise voneinander verschieden. Beispielsweise kann die Betriebsfrequenz f1 den Wert 280 kHz aufweisen, während die Betriebsfrequenz f2 den Wert 300 kHz aufweist und die Betriebsfrequenz f3 den Wert 320 kHz aufweist. Die genannten Werte sind selbstverständlich nur rein beispielhaft.

Ersichtlich werden die Wirbelstromsensoren von Sensorelementen 16, die in der Metallplatte 14 unmittelbar benachbart angeordneten sind, mit voneinander verschiedenen Betriebsfrequenzen f1, f2, f3 betrieben. Damit kann ein etwaiges Übersprechverhalten (Crosstalk) deutlich reduziert werden.

Im Falle voneinander verschiedener Betriebsfrequenzen f1, f2, f3 ist es entsprechend der Darstellung in den FIG 13 und 14 weiterhin möglich, dass die Anzahl an Sensorelementen 16, deren digitalisierte Messsignale über eine einzelne der Leitungen 41 übermittelt werden, gleich der Anzahl an Betriebsfrequenzen f1, f2, f3 ist. In diesem Fall kann insbesondere die Gruppenbildung der Sensorelemente 16 derart erfolgen, dass jede Betriebsfrequenz f1, f2, f3 in den Gruppen jeweils einmal vertreten ist. In FIG 14 sind die entsprechenden Gruppen jeweils gestrichelt eingerahmt.

Im Falle voneinander verschiedener Betriebsfrequenzen f1, f2, f3 weisen die Sensorelemente 16 entsprechend der Darstellung in den FIG 11 und 12 (siehe für ein einzelnes Sensorelement 16 auch FIG 9) vorzugsweise eine Kodierung 44 auf. Die Kodierung 44 ist für die Betriebsfrequenz f1, f2, f3 des jeweiligen Sensorelements 16 charakteristisch. Die Kodierung 44 kann optischer Natur sein. Beispielsweise können für die verschiedenen Betriebsfrequenzen f1, f2, f3 voneinander verschiedene Farben verwendet werden, beispielsweise Rot, Grün und Blau oder Gelb, Rot und Blau. Ebenso kann die Kodierung 44 haptischer Natur sein. Beispielsweise kann die Betriebsfrequenz f1 durch einen umlaufenden Ring am Kabel 36 codiert sein, während die Betriebsfrequenzen f2 und f3 durch zwei umlaufende Ringe am Kabel 36 codiert sein können, wobei die Unterscheidung zwischen der Betriebsfrequenz f2 und der Betriebsfrequenz f3 durch den Abstand der beiden Ringe erfolgen kann. Eine weitere Betriebsfrequenz f könnte beispielsweise durch drei derartige Ringe codiert sein. In ähnlicher Weise ist auch eine mechanische Kodierung möglich.

Vorzugsweise weisen auch die Digitalisierungseinrichtungen 15 eine korrespondierende Kodierung 45 auf, so dass auch die korrekte Zuordnung ohne weiteres ersichtlich ist.

Die Auswertungseinrichtung 34 nimmt entsprechend der Darstellung in FIG 15 von den Digitalisierungseinrichtungen 35 die übermittelten (digitalen) Signale MA' entgegen. Im Rahmen einer Auswertung der übermittelten Signale MA' ermittelt sie für den jeweiligen Bereich des Metallbandes 1 die Amplitude A von dessen mechanischer Schwingung.

Zur Ermittlung der Amplituden A nimmt die Auswertungseinrichtung 34 zunächst in einem Linearisierungsblock 46 eine Linearisierung der übermittelten Signale MA' vor. Der Linearisierungsblock 46 gibt also modifizierte Signale MA" aus, deren jeweiliger Wert proportional zur korrespondierenden Auslenkung des jeweiligen Bereichs des Metallbandes 1 zum demjenigen Zeitpunkt ist, zu dem das korrespondierende (analoge) Messsignal MA erfasst wurde. Im Rahmen der Linearisierung verwertet die Auswertungseinrichtung 34 eine Kennlinie K. Die Kennlinie K wird von der Auswertungseinrichtung 34 spezifisch für das Metallband 1 bestimmt. Die Bestimmung kann beispielsweise in Abhängigkeit von geometrischen Eigenschaften G und/oder chemischen Eigenschaften C und/oder thermodynamischen Eigenschaften T (beispielsweise der Temperatur) und/ oder der Historie H des Metallbandes 1 erfolgen. Gegebenenfalls kann im Rahmen der Ermittlung der Kennlinie K zusätzlich auch eine Betriebstemperatur T' der Sensorelemente 16 berücksichtigt werden.

Zur Bestimmung der Kennlinie K können beispielsweise in einer Ermittlungseinrichtung 47 für bestimmte Werte der geometrischen Eigenschaften G, der chemischen Eigenschaften C usw. die zugehörigen Kennlinien K hinterlegt sein, so dass durch Auswahl und/oder Interpolation die konkret verwertete Kennlinie K ermittelt werden kann.

Die modifizierten Signale MA" werden innerhalb der Auswertungseinrichtung 34 einem Ermittlungsblock 48 zugeführt. In dem Ermittlungsblock 48 ermittelt die Auswertungseinrichtung 34 für die Bereiche des Metallbandes 1 die jeweilige Amplitude A der angeregten mechanischen Schwingung des Metallbandes 1. Im Rahmen der Ermittlung der Amplituden A verwendet die Auswertungseinrichtung 34 entsprechend der Darstellung in FIG 15 vorzugsweise einen Goertzel-Algorithmus. Ganz besonders bevorzugt ist, dass die Auswertungseinrichtung 34 innerhalb des Goertzel-Algorithmus die Anregungsfrequenz fA berücksichtigt.

Die ermittelten Amplituden A können einem weiteren Ermittlungsblock 49 zugeführt werden. In dem Ermittlungsblock 49 ermittelt die Auswertungseinrichtung 34 anhand der Amplituden A für die Bereiche des Metallbandes 1 jeweils einen Planheitsfehler PF. Die Ermittlung der Planheitsfehler PF als solche ist nicht mehr Gegenstand der vorliegenden Erfindung.

Die ermittelten Planheitsfehler PF kann die Auswertungseinrichtung 34 beispielsweise an eine Steuereinrichtung (nicht dargestellt) für die vordere Einrichtung 2 ausgeben, so dass die Steuereinrichtung Planheitsstellglieder der vorderen Einrichtung 2 derart ansteuern kann, dass die Planheitsfehler PF so weit wie möglich eliminiert werden.

Die vorliegende Erfindung weist viele Vorteile auf. Die Verwendung der Abdeckung 17 verbessert die Empfindlichkeit der Sensoren 19. Der Austausch der Sensorelemente 16 wird deutlich vereinfacht. Durch die Ausgestaltung der Sensorelemente 16 als vorkonfektionierte Baueinheiten kann auch die Positionierung der Sensorelemente 16 in der Metallplatte 14 zuverlässig und exakt gewährleistet werden. Dies gilt auch für das nachträglichen Ersetzen eines defekten Sensorelements 16 durch ein neues Sensorelement 16. Durch die Ausgestaltung der Sensorelemente 16 als vorkonfektionierte Baueinheiten ist auch der Schutz der Sensoren 19 gegen Feuchtigkeit, Schmutz und in Grenzen auch gegen großen Wärmeeintrag verringert. Dadurch verbessert sich die Haltbarkeit der Sensorelemente 16. Die Kühlung der Sensorelemente 16 mittels des Kühlmediums 23 bewirkt zugleich auch einen verbesserten Schutz vor Verschmutzung und Feuchtigkeit. Durch die Verwendung mehrerer Betriebsfrequenzen f1, f2, f3 kann Übersprechen (Crosstalk) weitestgehend eliminiert werden. Durch die sehr frühe Digitalisierung der Messsignale MA noch innerhalb der Messanordnung 6 können die Messsignale MA sehr schnell in eine gegen Störungen immune Form überführt werden. Dies ermöglicht unter anderem eine Vergrößerung des auswertbaren Messbereichs. Durch die Auswertung in Verbindung mit Kennlinien K, die spezifisch für das Metallband 1 sind, ist ebenfalls eine verbesserte Auswertung und auch eine Auswertung in einem vergrößerten Messbereich möglich. Durch die Verwendung der Kennlinie K ist eine Auswertung der Messsignale MA möglich, die für das jeweilige Metallband 1 optimiert ist. Die Auswertung mittels eines Goertzel-Algorithmus liefert überlegene Ergebnisse bei verringertem Rechenaufwand.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

### Bezugszeichenliste

- 1: Metallband
- 2: vordere Einrichtung
- 3: hintere Einrichtung
- 4: Haspel
- 5: Umlenkrolle
- 6: Messanordnung
- 7: mechanische Anregungseinrichtung
- 8: Doppelpfeil
- 9: Saugebläse
- 10: Saugöffnungen
- 11: Saugkanal
- 12: Modulatorelement
- 13: Grenzfläche
- 14: Metallplatte
- 15, 18: Oberseite
- 16: Sensorelemente
- 17: Abdeckung
- 19: Sensoren
- 20: Anregungsspule
- 21, 32: Aufnahmen
- 22: Ausnehmungen
- 23: Kühlmedium
- 24: Einlässe
- 25: Auslässe
- 26: Kanäle
- 27: Hülse
- 28: Fixierungselement
- 29: Kunststoffhaube
- 30: Außengewinde
- 31: Kragen
- 33: Auflagering
- 34: Auswertungseinrichtung
- 35: Digitalisierungseinrichtungen
- 36: Kabel
- 37: gepanzertes Kabel
- 38: vorkonfektionierte Anschlüsse
- 39: Leitungen oder dünne Kabel
- 40, 42: Steckverbindungen
- 41: Leitungen des gepanzerten Kabels
- 43: Panzerung
- 44, 45: Kodierungen
- 46: Linearisierungsblock
- 47: Ermittlungseinrichtung
- 48, 49: Ermittlungsblöcke

- A: Amplituden
- C: chemische Eigenschaften
- f, f1 bis f3: Betriebsfrequenzen
- fA: Anregungsfrequenz
- G: geometrische Eigenschaften
- H: Historie
- IA: Anregungsstrom
- K: Kennlinien
- L: Linie
- MA: analoges Messsignal
- MA': übermittelte Signale
- MA": modifizierte Signale
- PF: Planheitsfehler
- T: thermodynamische Eigenschaften
- T': Betriebstemperatur
- x: Förderrichtung

## Patentansprüche

1. Messanordnung in einer Transporteinrichtung für ein Metallband (1),
- wobei die Messanordnung zwischen einer vorderen Einrichtung (2) und einer der vorderen Einrichtung (2) nachgeordneten hinteren Einrichtung (3) der Transporteinrichtung angeordnet ist,
- wobei die Messanordnung eine mechanische Anregungseinrichtung (7) aufweist, mittels derer das Metallband (1) in seiner Dickenrichtung mit einer Anregungsfrequenz (fA) zu einer mechanischen Schwingung anregbar ist,
- wobei die mechanische Anregungseinrichtung (7) eine dem Metallband (1) zugewandte ebene Grenzfläche (13) aufweist,
- wobei die Messanordnung eine Metallplatte (14) aufweist, deren Oberseite (15) dem Metallband (1) zugewandt ist,
- wobei in der Metallplatte (14) eine Mehrzahl von Sensorelementen (16) angeordnet ist,
- wobei die Sensorelemente (16) in einer Breitenrichtung des Metallbandes (1) gesehen gegeneinander versetzt angeordnet sind,
- wobei mittels der Sensorelemente (16) für mehrere in der Breitenrichtung gegeneinander versetzte Bereiche des Metallbandes (1) jeweils ein Messsignal (MA) erfassbar ist, das für die Amplitude (A) der angeregten mechanischen Schwingung des jeweiligen Bereichs des Metallbandes (1) charakteristisch ist,
**dadurch gekennzeichnet,**
- **dass** die Sensorelemente (16) auf das Metallband (1) zu über die Oberseite (15) der Metallplatte (14) hinausragen und
- **dass** die Messanordnung eine Abdeckung (17) aufweist, die aus einem elektrisch isolierenden Material besteht und die Sensorelemente (16) an ihrer Oberseite abdeckt und an ihren Seiten abdichtet.

2. Messanordnung nach Anspruch 1,
**dadurch gekennzeichnet,**
**dass** die Abdeckung (17) auf ihrer den Sensorelementen (16) zugewandten Unterseite Ausnehmungen (21) aufweist, so dass zwischen der Metallplatte (14) und der Abdeckung (17) eine Anzahl von Strömungskanälen für ein Kühlmedium (23) gebildet wird, mittels dessen die Sensorelemente (16) kühlbar sind.

3. Messanordnung nach Anspruch 2,
**dadurch gekennzeichnet,**
**dass** die Strömungskanäle derart ausgebildet sind, dass, bezogen auf einen der Strömungskanäle, die Sensorelemente (16) in Strömungsrichtung des Kühlmediums (23) gesehen sequenziell hintereinander angeordnet sind.

4. Messanordnung nach Anspruch 3,
**dadurch gekennzeichnet,**
- **dass** die Abdeckung (17) auf ihrer Unterseite Aufnahmen (21) für die Sensorelemente (16) aufweist, soweit diese über die Oberseite (15) der Metallplatte (14) hinausragen,
- **dass** die Aufnahmen (21) jeweils einen Einlass (24) für das Kühlmedium (23) und einen Auslass (25) für das Kühlmedium (23) aufweisen,
- **dass** der Auslass (25) einer jeweiligen Aufnahme (21) über einen jeweiligen Verbindungsabschnitt des jeweiligen Strömungskanals mit dem Einlass (24) der in Strömungsrichtung des Kühlmediums (23) gesehen jeweils nächsten Aufnahme (21) kommunizierend verbunden ist und
- **dass** der Einlass (24) und der Auslass (25) einer jeweiligen Aufnahme (21) vom jeweiligen Sensorelement (16) aus gesehen einander gegenüberliegend angeordnet sind.

5. Messanordnung nach einem der obigen Ansprüche,
**dadurch gekennzeichnet,**
**dass** eine Oberseite (18) der Abdeckung (17) in der durch die ebene Grenzfläche (13) gebildeten Ebene liegt.

6. Messanordnung nach einem der obigen Ansprüche,
**dadurch gekennzeichnet,**
**dass** die Abdeckung (17) aus einer Keramik oder aus einem Kunststoff besteht.

7. Messanordnung nach einem der obigen Ansprüche,
**dadurch gekennzeichnet,**
**dass** in der Metallplatte (14) Kanäle (26) für eine Kühlflüssigkeit angeordnet sind, mittels derer die Metallplatte (14) und dadurch indirekt auch die Sensorelemente (16) kühlbar sind.

8. Messanordnung nach einem der obigen Ansprüche,
**dadurch gekennzeichnet,**
- **dass** die Sensorelemente (16) jeweils eine Hülse (27) mit einem Außengewinde (30) aufweisen,
- **dass** in der jeweiligen Hülse (27) ein jeweiliger Sensor (19) angeordnet ist, mittels dessen jeweils eines der Messsignale (MA) erfassbar ist, und
- **dass** auf die jeweilige Hülse (27) ein jeweiliges Fixierungselement (28) aufgebracht ist, das einen in Radialrichtung über die jeweilige Hülse (27) nach radial außen vorspringenden Kragen (31) aufweist.

9. Messanordnung nach Anspruch 8,
**dadurch gekennzeichnet,**
**dass** die Metallplatte (14) Aufnahmen (32) für die Sensorelemente (16) aufweist, die ihrerseits jeweils einen nach radial innen ragenden Auflagering (33) für den jeweiligen Kragen (31) des jeweiligen Sensorelements (16) aufweisen.

10. Messanordnung nach Anspruch 8 oder 9,
**dadurch gekennzeichnet,**
**dass** auf den jeweiligen Sensor (19) an seiner dem Metallband (1) zugewandten Seite eine Kunststoffhaube (29) aufgebracht ist, so dass der jeweilige Sensor (19), soweit er über die Metallplatte (14) hinausragt, luftdicht und wasserdicht versiegelt ist.

11. Messanordnung nach einem der obigen Ansprüche,
**dadurch gekennzeichnet,**
**dass** die Sensorelemente (16) Wirbelstromsensoren umfassen und
**dass** die Wirbelstromsensoren von in der Metallplatte (14) unmittelbar benachbart angeordneten Sensorelementen (16) mit voneinander verschiedenen Betriebsfrequenzen (f1, f2, f3) betrieben werden.

12. Messanordnung nach Anspruch 11,
**dadurch gekennzeichnet,**
**dass** die Sensorelemente (16) eine Kodierung (44) aufweisen, die für die Betriebsfrequenz (f1, f2, f3) des jeweiligen Sensorelements (16) charakteristisch ist.
